# EUROPEAN PATENT SPECIFICATION

(11) **EP 4 072 788 B1**
(45) Date of publication and mention of the grant of the patent: **24.04.2024**
(21) Application number: 20812384.4
(22) Date of filing: 02.12.2020
(51) Int. Cl.: B25F 5/02

(54) **HANDHELD WORKING TOOL**
TRAGBARES ARBEITSWERKZEUG
OUTIL DE TRAVAIL PORTABLE

(30) Priority: 12.12.2019 EP 19215474
(43) Date of publication of application: 19.10.2022
(73) Proprietor: Hilti Aktiengesellschaft, 9494 Schaan (LI)
(72) Inventor: DANG, Lieu-Kim, 9473 Gams (CH); SCHRANER, Jann, 9435 Heerbrugg (CH); O'DOWD, Neil, Curragha Ashbourne Meath, CO. (IE)
(74) Representative: Hilti Aktiengesellschaft Corporate Intellectual Property
(86) International application number: PCT/EP2020/084259
(87) International publication number: WO 2021/115873

(56) References cited:
- EP-A1- 0 504 745
- DE-A1- 19 943 818
- DE-A1-102004 063 537
- DE-A1-102017 127 325
- US-A1- 2006 179 666
- US-A1- 2007 030 486
- US-A1- 2014 118 843
- US-B1- 6 565 227
- US-B2- 10 150 167

## Description

### Technical Field

The present invention relates to a handheld working tool for treating a workpiece, such as a drill machine or drill hammer for creating a hole in the workpiece, or a setting tool for setting a fastening element, such as a screw, nail, bolt, pin, staple or the like, into the workpiece.

### Background Art

Handheld tools are known which are used for treating a workpiece, such as drilling a hole into the workpiece or fastening a fastening element to the workpiece, such as a wall or ceiling or the like. It is well known to provide a handheld tool with a tool nose which in use contacts the workpiece at a working point in order to treat the workpiece at the working point.

In some applications, the working point needs to be in a certain distance to an object, such as a neighboring wall, a boundary of the workpiece, a neighboring working point or the like. For example, a hole in a workpiece might have to be in a minimum distance to an edge of the workpiece, or the fastening points of an electric line or a tubing might have to be in a specific distance to a sidewall and/or in a maximum distance to each other to ensure adequate fastening of the line. To ensure the correct distance of the working point to the object, a user of the handheld tool needs to measure the distance, such as by using a rod, the length of which corresponds to the intended distance, before contacting the tool nose to the working point, which may be inaccurate and/or time-consuming.

DE 10 2004 063 537 A1 discloses a tacker for driving in fastening elements. The tacker has a housing and a distance setting device disposed at the housing for observing a predetermined distance between consecutive fastening elements. The distance setting device comprises a projection unit that projects a light mark onto a workpiece at a predetermined distance from an ejection channel of the tacker.

US 2006/0179666 A1, US 6,565,227 B1, DE 10 2017 127 325 A1, EP 0 504 745 A1, and DE 199 43 818 A1 show other devices configured to project a light beam onto a surface to create a visible spot or line on the surface.

### Summary of Invention

According to a first aspect of the invention, a handheld working tool for treating a workpiece comprises a tool nose provided for contacting the workpiece at a working point, and an indicator provided for indicating a reference line on a surface of the workpiece at a predetermined distance to the working point when the tool nose contacts the workpiece at the working point, wherein the reference line forms a circular arc having its center at the working point..

According to an embodiment, the indicator comprises an adjusting element provided for adjusting the predetermined distance by a user of the tool.

According to a further embodiment, the indicator comprises a light source and a projector projecting a light beam emitted by the light source onto the reference line. According to a preferred embodiment, the light source comprises a light emitting diode or a laser diode.

According to a further embodiment, the projector comprises a first axicon having a first optical axis, wherein the first axicon turns the light beam emitted by the light source into a first ring-shaped light beam having a propagation direction at a first ring angle with respect to the first optical axis. According to a preferred embodiment, the first optical axis extends through the working point when the tool nose contacts the workpiece at the working point. According to a further preferred embodiment, the first axicon is concave. According to an alternative embodiment, the first axicon is convex.

According to another preferred embodiment, the first axicon is transparent. According to an alternative embodiment, the first axicon is reflective. According to another preferred embodiment, the indicator comprises an adjusting element controlling a position of the first axicon along the first optical axis for adjusting the predetermined distance. According to another preferred embodiment, the projector comprises a collimator arranged between the light source and the first axicon and collimating the light beam emitted by the light source onto the first axicon.

According to a further embodiment, the projector comprises a second axicon having a second optical axis, wherein the second axicon turns the first ring-shaped light beam emitted by the first axicon into a second ring-shaped light beam having a propagation direction at a second ring angle with respect to the second optical axis different from the first ring angle. According to a preferred embodiment, the second optical axis extends through the working point when the tool nose contacts the workpiece at the working point. According to another preferred embodiment, the second optical axis coincides with the first optical axis. According to a further preferred embodiment, the second axicon is concave. According to an alternative embodiment, the second axicon is convex. According to another preferred embodiment, the second axicon is transparent. According to an alternative embodiment, the second axicon is reflective.

According to a further preferred embodiment, a distance from the second optical axis at which the first ring-shaped light beam enters the second axicon determines the second ring angle, and wherein the indicator comprises an adjusting element controlling a distance between the first axicon and the second axicon along the second optical axis for adjusting the predetermined distance. According to a further preferred embodiment, the second axicon is concave.

According to a further embodiment, the tool further comprises a housing, wherein the indicator is attached to the housing. According to a preferred embodiment, the indicator is fastened to the housing.

According to a further embodiment, the tool is formed as a setting tool for fastening a fastening element into the workpiece at the working point.

### Brief Description of Drawings

The invention will be described in more detail by way of example hereinafter with reference to the drawings. The described embodiments are only possible configurations in which the individual features may however be implemented independently of each other or may be omitted.

In the drawings:
Fig. 1 is a side view of a handheld working tool according to the present invention;
Fig. 2 is another side view of the handheld working tool shown in Fig. 1;
Fig. 3 is a schematic view of an indicator according to a first embodiment;
Fig. 4 is a schematic view of an indicator according to a second embodiment; and
Fig. 5 is a schematic view of an indicator according to a third embodiment.

### Description of Embodiments

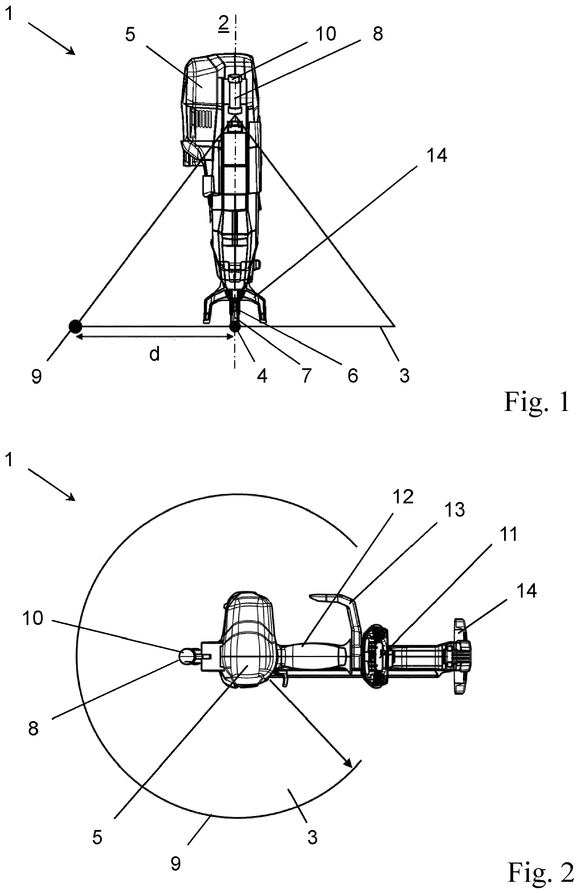

Figs. 1 and 2 show a handheld working tool 1 which is formed as a setting tool for fastening a fastening element along an axis 2 into a workpiece 3 at a working point 4. The fastening elements are formed as nails. In non-shown embodiments, the fastening elements are formed as e.g. bolts, pins, clips, cranks or screws. The working tool 1 comprises a driver (hidden in the Figs.) which is formed as e.g. a setting piston or screwdriver bit. Further, the working tool 1 comprises a housing 5 and, received in the housing 5, a driving device (hidden in the Figs.) for driving the driver onto a fastening element to drive the fastening element into the workpiece 3. The driving device comprises e.g. a gas- or powder-actuated combustion drive, an air-pressure drive, or a spring-, flywheel or electrodynamic driven electric drive having, in particular, an electric motor, a coil, and/or an electric battery 11. The working tool 1 further comprises a grip 12 with a trigger (hidden in the Figs.) for manually triggering a setting, a scaffold hook 13 and a two- or three-leg support 14 provided for easier determination of an orientation of the axis 2 perpendicular to a surface of the workpiece 3.

Further, the fastening tool 1 comprises a tool nose 6 provided for contacting the workpiece 3 at the working point 4. The tool nose 6 has a press-on element which is displaceable, with respect to the housing 5, along the axis 2 away from the workpiece 3. When the press-on element is pressed against the workpiece 3 along the axis 2, the press-on element is displaceable up to a pressed-on position. If the press-on element is in the pressed-on position, it releases a driving-in operation of the working tool 1. If the press-on element is out of the pressed-on position, the press-on element prevents a driving-in operation of the working tool 1. The tool nose 6 comprises a guide channel 7 in which a fastening element is guided when driven into the workpiece 3. In non-shown embodiments, the tool nose comprises a separate guide channel extending along the press-on element along the axis.

The workpiece 4 may be made of a metal, an alloy, concrete, wood, or the like, according to a specific application. The fastening elements are made of a metal, such as iron, or an alloy, such as steel. The fastening elements are fed collated to the guide channel 7. To this end, the fastening tool comprises a magazine 8 opening out into the guide channel 7. In non-shown embodiments, the fastening elements are automatically or manually fed one-by-one to the guide channel.

The working tool further comprises an indicator 8 fastened to the housing 5. The indicator 8 indicates a reference line 9 on a surface of the workpiece 3 at a predetermined distance d to the working point 4 when the tool nose 6 contacts the workpiece 3 at the working point 4, as shown in Fig. 1 and 2. The reference line 9 is a circular arc having its center point at the working point 4. Since the indicator 8 is slightly off-set with respect to the axis 2, an optical axis of the indicator may be slightly inclined with respect to the axis 2. In non-shown embodiments, the indicator indicates one or several single reference points on the surface of the workpiece, wherein each single reference point is located at the predetermined distance to the working point.

The indicator 8 comprises an adjusting element 10 provided for adjusting the predetermined distance d by a user of the tool. In the shown embodiment, the adjusting element 10 comprises an adjustment wheel which the user can turn manually. Any electrical energy used by the indicator 8 is provided by the battery 11. In a non-shown embodiment, such electrical energy is provided by a separate battery arranged in the indicator or within the housing. A user of the working tool 1 may determine a working point by adjusting the predetermined distance to a desired distance of the working point to an object and placing the tool nose 6 on the workpiece 3 so as to coincide the reference point or line 9 with the object. Thus, a correct distance of the working point 4 to the object is ensured within a short time.

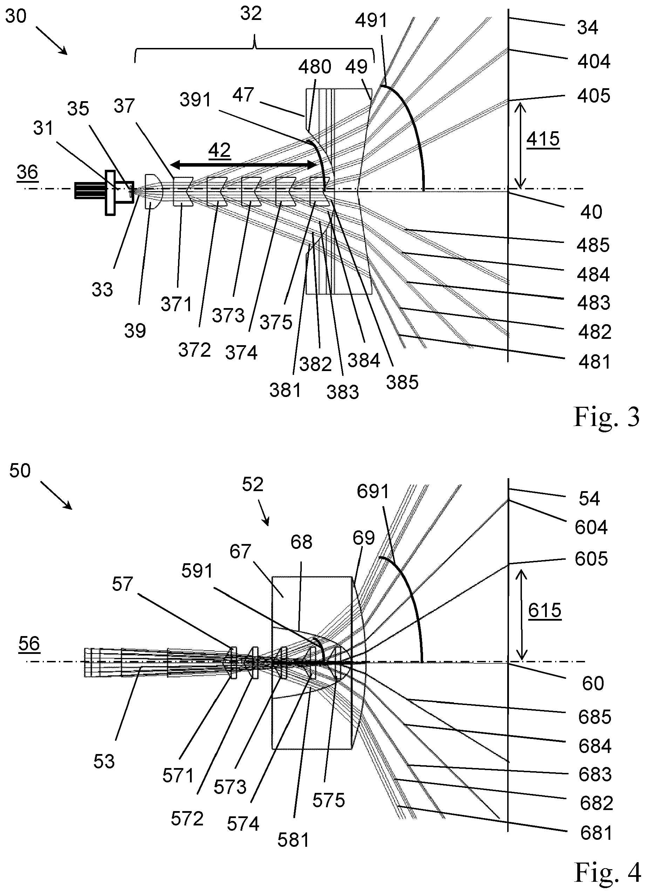

Fig. 3 shows an embodiment of an indicator 30 which may be used in the working tool shown in Figs. 1 and 2. The indicator 30 comprises a light source 31 and a projector 32 projecting a light beam 33 emitted by the light source 31 in form of a second ring-shaped light beam 481, 482, 483, 484, 485 onto a workpiece 34, as described below. The light source 31 comprises a light emitting diode 35. In a non-shown embodiment, the light source comprises a laser diode.

The projector 32 is arranged symmetrically about an axis 36 extending through a working point 40 on the workpiece 34, and comprises a first axicon 37 having a first optical axis which coincides with the axis 36. The first axicon 37 is laterally movable (at 42) along the axis 36 and shown in five different axial positions 371, 372, 373, 374, 375. The first axicon 37 is transparent, concave and turns the light beam 33 emitted by the light source 31 into a first ring-shaped light beam 381, 382, 383, 384, 385 having a propagation direction at a first ring angle 391 with respect to the first optical axis, i.e. axis 36 (shown only for light beam 381). The first axicon 37 may be made of glass or plastic. In non-shown embodiments, a diffractive optical element may be used instead of the first axicon. In this respect, any diffractive optical element turning a light beam into a ring-shaped light beam may be used. Further, the projector 32 comprises a collimator 39 arranged between the light source 31 and the first axicon 37. The collimator 39 collimates the light beam 33 emitted by the light source 31 onto the first axicon 37.

The projector 32 also comprises a second axicon 47 having a second optical axis which coincides with the axis 36, and thus with the first optical axis of the first axicon 37. The second axicon has five concave, ring-shaped, or frustoconical optical entry faces 480 which correspond to the five different axial positions 371, 372, 373, 374, 375 of the first axicon 37, respectively (shown only for the axial position 371). Further, the second axicon 47 has a concave, ring-shaped, or frustoconical optical exit face 49. The second axicon 47 is thus concave and transparent, and turns the first ring-shaped light beam 381, 382, 383, 384, 385 emitted by the first axicon 37 into a second ring-shaped light beam 481, 482, 483, 484, 485, respectively, having a propagation direction at a second ring angle 491 with respect to the second optical axis, i.e. axis 36 (shown only for light beam 481).

Since the second axicon 47 is concave, the second ring angle 491 is greater than the first ring angle 391. Altogether, the projector 32 turns the light beam 33 emitted by the light source 31 into a circular-arc shaped reference line 404, 405 (shown only for light beams 484, 485) on the workpiece 34, having its center at the working point 40 and a radius 415 (shown only for reference line 405). As shown in Fig. 2, such reference line may be shadowed by a working tool carrying the indicator 30. In non-shown embodiments, the first optical axis and the second optical axis are slightly inclined with respect to a direction perpendicular to a surface of the workpiece. The first optical axis and the second optical axis may then be slightly off-set with respect to the working point.

Since the second axicon 47 is concave, a distance from the second optical axis at which the first ring-shaped light beam 381, 382, 383, 384, 385 enters the second axicon 47 determines the second ring angle 491 and thus a radius 415 of the circular reference line projected onto the workpiece 34. Therefore, the radius of the circular reference line may be adjusted by controlling a distance between the first axicon 37 and the second axicon 47 along the second optical axis, i.e. axis 36. To this end, the indicator 30 comprises an adjusting element (not shown in Fig. 3) controlling a position of the first axicon 37 along the first optical axis, i.e. axis 36. As shown in Fig. 3, the five different axial positions 371, 372, 373, 374, 375 of the first axicon 37 correspond to the light beams 481, 482, 483, 484, 485 and to corresponding reference lines 404, 405, respectively.

Fig. 4 shows another embodiment of an indicator 50 which may be used in the working tool shown in Figs. 1 and 2. The indicator 50 comprises a light source (not shown) and a projector 52 projecting a light beam 53 emitted by the light source in form of a second ring-shaped light beam 581, 582, 583, 584, 585 onto a workpiece 54, as described below. The projector 52 is arranged symmetrically about an axis 56 extending through a working point 60 on the workpiece 54, and comprises a first axicon 57 having a first optical axis which coincides with the axis 56. The first axicon 57 is laterally movable along the axis 56 and shown in five different axial positions 571, 572, 573, 574, 575. The first axicon 57 is convex, e.g. conical, and turns the light beam 53 through a focal point into a first ring-shaped light beam 581 having a propagation direction at a first ring angle 591 with respect to the first optical axis, i.e. axis 56 (shown only for axial position 571).

The projector 52 also comprises a second axicon 67 having a second optical axis which coincides with the axis 56, and thus with the first optical axis of the first axicon 57. The second axicon has a concave optical entry face 68 comprising a first radius of curvature, and a convex optical exit face 69 comprising a second radius of curvature which is greater than the first radius of curvature. The second axicon 67 is thus concave and turns the first ring-shaped light beam 581 emitted by the first axicon 57 into a second ring-shaped light beam 681, 682, 683, 684, 685 having a propagation direction at a second ring angle 691 with respect to the second optical axis, i.e. axis 56 (shown only for light beam 681). Since the second axicon 67 is concave, the second ring angle 691 is greater than the first ring angle 591. Altogether, the projector 52 turns the light beam 53 emitted by the light source into a circular-arc shaped reference line 604, 605 (shown only for light beams 684, 685) on the workpiece 54, having its center at the working point 60 and a radius 615 (shown only for reference line 605). As shown in Fig. 2, such reference line may be shadowed by a working tool carrying the indicator 50.

Since the second axicon 67 is concave, a distance from the second optical axis at which the first ring-shaped light beam 581 enters the second axicon 67 determines the second ring angle 691 and thus a radius 615 of the circular reference line projected onto the workpiece 54. Therefore, the radius of the circular reference line may be adjusted by controlling a distance between the first axicon 57 and the second axicon 67 along the second optical axis, i.e. axis 56. To this end, the indicator 50 comprises an adjusting element (not shown in Fig. 4) controlling a position of the first axicon 57 along the first optical axis, i.e. axis 56. As shown in Fig. 4, the five different axial positions 571, 572, 573, 574, 575 of the first axicon 57 correspond to the light beams 681, 682, 683, 684, 685 and to corresponding reference lines 604, 605, respectively.

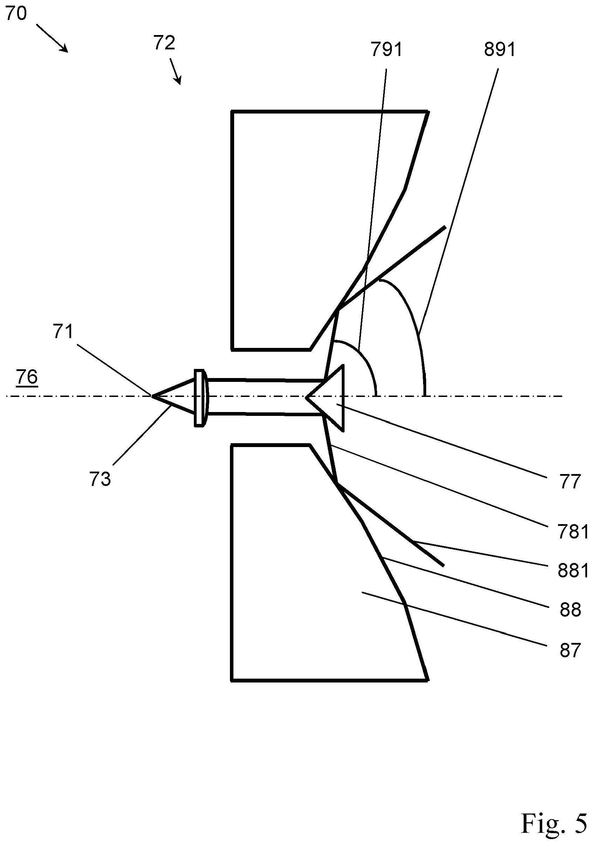

Fig. 5 shows another embodiment of an indicator 70 which may be used in the working tool shown in Figs. 1 and 2. The indicator 70 comprises a light source 71 and a projector 72 projecting a light beam 73 emitted by the light source 71 in form of a second ring-shaped light beam 881 onto a non-shown workpiece, as described below. The projector 72 is arranged symmetrically about an axis 76 extending through a working point on the workpiece, and comprises a first axicon 77 having a first optical axis which coincides with the axis 76. The first axicon 77 is convex, e.g. conical, and turns the light beam 73 by reflection into a first ring-shaped light beam 781 having a propagation direction at a first ring angle 791 with respect to the first optical axis, i.e. axis 56.

The projector 72 also comprises a second axicon 87 having a second optical axis which coincides with the axis 76, and thus with the first optical axis of the first axicon 77. The second axicon has a convex, reflective face 88. The second axicon 67 turns the first ring-shaped light beam 781 emitted by the first axicon 77 into a second ring-shaped light beam 881 having a propagation direction at a second ring angle 891 with respect to the second optical axis, i.e. axis 76. The second ring angle 891 is smaller than the first ring angle 791. Altogether, the projector 72 turns the light beam 73 emitted by the light source 71 into a circular-arc shaped reference line (not shown) on the workpiece, having its center at the working point.

Since the second axicon 87 is convex and reflective, a distance from the second optical axis at which the first ring-shaped light beam 781 is reflected at the reflective face 88, the second axicon 87 determines the second ring angle 891 and thus a radius of the circular reference line projected onto the workpiece. Therefore, the radius of the circular reference line may be adjusted by controlling a distance between the first axicon 77 and the second axicon 87 along the second optical axis, i.e. axis 76. To this end, the indicator 50 comprises an adjusting element (not shown in Fig. 6) controlling a position of the first axicon 77 along the first optical axis, i.e. axis 76. The first axicon 77 and the second axicon 87 may be made of glass, plastic, or metal. Further, the first axicon 77 and the second axicon 87 may be coated with a reflective material, such as metal.

The foregoing description of exemplary embodiments of the invention has been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A handheld working tool for treating a workpiece (3), comprising a tool nose (6) provided for contacting the workpiece (3) at a working point (4), and an indicator (8) provided for indicating a reference line (9) on a surface of the workpiece (3) at a predetermined distance to the working point (4) when the tool nose (6) contacts the workpiece (3) at the working point (4), **characterized in that** the indicator (8) is configured to indicate the reference line (9) forming a circular arc having its center at the working point (4).

2. The tool according to any one of the preceding claims, wherein the indicator (8) comprises an adjusting element (10) provided for adjusting the predetermined distance by a user of the tool.

3. The tool according to any one of the preceding claims, wherein the indicator (8) comprises a light source (31) and a projector (32) projecting a light beam (33) emitted by the light source (31) onto the reference line (9).

4. The tool according to claim 3, wherein the light source (31) comprises a light emitting diode (35) or a laser diode.

5. The tool according to any one of claims 3 and 4, wherein the projector (32) comprises a first axicon (37) having a first optical axis (36) which in particular extends through the working point (4) when the tool nose (6) contacts the workpiece (3) at the working point (4), wherein the first axicon (37) turns the light beam (33) emitted by the light source (31) into a first ring-shaped light beam (381) having a propagation direction at a first ring angle with respect to the first optical axis (36).

6. The tool according to claim 5, wherein the first axicon (37) is concave, or convex.

7. The tool according to any one of claims 5 and 6, wherein the first axicon (37) is transparent, or reflective.

8. The tool according to any one of claims 5 to 7, wherein the indicator (8) comprises an adjusting element (10) controlling a position of the first axicon (37) along the first optical axis (36) for adjusting the predetermined distance.

9. The tool according to any one of claims 5 to 8, wherein the projector (32) comprises a collimator (39) arranged between the light source (31) and the first axicon (37) and collimating the light beam (33) emitted by the light source (31) onto the first axicon (37).

10. The tool according to any one of claims 5 to 9, wherein the projector (32) comprises a second axicon (47) having a second optical axis (36) which in particular extends through the working point (4) when the tool nose (6) contacts the workpiece (3) at the working point (4) and which in particular coincides with the first optical axis (36), wherein the second axicon (47) turns the first ring-shaped light beam (381) emitted by the first axicon (37) into a second ring-shaped light beam (281) having a propagation direction at a second ring angle with respect to the second optical axis (36) different from the first ring angle.

11. The tool according to claim 10, wherein the second axicon (47) is concave.

12. The tool according to any one of claims 10 and 11, wherein the second axicon (47) is transparent, or reflective.

13. The tool according to any one of claims 10 to 12, wherein a distance from the second optical axis (36) at which the first ring-shaped light beam (381) enters the second axicon (47) determines the second ring angle, and wherein the indicator (8) comprises an adjusting element (10) controlling a distance between the first axicon (37) and the second axicon (47) along the second optical axis (36) for adjusting the predetermined distance.

## Patentansprüche

1. Tragbares Arbeitswerkzeug zum Bearbeiten eines Werkstücks (3), umfassend eine Werkzeugspitze (6), die bereitgestellt ist, um das Werkstück (3) an einem Arbeitspunkt (4) zu kontaktieren, und eine Anzeigevorrichtung (8), die bereitgestellt ist, um eine Bezugslinie (9) auf einer Oberfläche des Werkstücks (3) in einem vorbestimmten Abstand zu dem Arbeitspunkt (4) anzuzeigen, wenn die Werkzeugspitze (6) das Werkstück (3) an dem Arbeitspunkt (4) kontaktiert, **dadurch gekennzeichnet, dass** die Anzeigevorrichtung (8) so konfiguriert ist, dass sie die Bezugslinie (9) anzeigt, die einen Kreisbogen bildet, dessen Mittelpunkt am Arbeitspunkt (4) liegt.

2. Werkzeug nach einem der vorhergehenden Ansprüche, wobei die Anzeigevorrichtung (8) ein Einstellelement (10) umfasst, das zum Einstellen des vorbestimmten Abstands durch einen Benutzer des Werkzeugs bereitgestellt ist.

3. Werkzeug nach einem der vorhergehenden Ansprüche, wobei die Anzeigevorrichtung (8) eine Lichtquelle (31) und einen Projektor (32) umfasst, der einen von der Lichtquelle (31) emittierten Lichtstrahl (33) auf die Bezugslinie (9) projiziert.

4. Werkzeug nach Anspruch 3, wobei die Lichtquelle (31) eine Leuchtdiode (35) oder eine Laserdiode umfasst.

5. Werkzeug nach einem der Ansprüche 3 und 4, wobei der Projektor (32) ein erstes Axikon (37) mit einer ersten optischen Achse (36) umfasst, die insbesondere durch den Arbeitspunkt (4) verläuft, wenn die Werkzeugspitze (6) das Werkstück (3) am Arbeitspunkt (4) kontaktiert, wobei das erste Axikon (37) den von der Lichtquelle (31) emittierten Lichtstrahl (33) in einen ersten ringförmigen Lichtstrahl (381) umwandelt, der eine Ausbreitungsrichtung mit einem ersten Ringwinkel in Bezug auf die erste optische Achse (36) aufweist.

6. Werkzeug nach Anspruch 5, wobei das erste Axicon (37) konkav oder konvex ist.

7. Werkzeug nach einem der Ansprüche 5 und 6, wobei das erste Axicon (37) transparent oder reflektierend ist.

8. Werkzeug nach einem der Ansprüche 5 bis 7, wobei die Anzeigevorrichtung (8) ein Einstellelement (10) umfasst, das eine Position des ersten Axikons (37) entlang der ersten optischen Achse (36) steuert, um den vorbestimmten Abstand einzustellen.

9. Werkzeug nach einem der Ansprüche 5 bis 8, wobei der Projektor (32) einen Kollimator (39) umfasst, der zwischen der Lichtquelle (31) und dem ersten Axikon (37) angeordnet ist und den von der Lichtquelle (31) emittierten Lichtstrahl (33) auf das erste Axikon (37) kollimiert.

10. Werkzeug nach einem der Ansprüche 5 bis 9, wobei der Projektor (32) ein zweites Axikon (47) mit einer zweiten optischen Achse (36) umfasst, die insbesondere durch den Arbeitspunkt (4) verläuft, wenn die Werkzeugspitze (6) das Werkstück (3) am Arbeitspunkt (4) kontaktiert, und die insbesondere mit der ersten optischen Achse (36) zusammenfällt, wobei das zweite Axikon (47) den vom ersten Axikon (37) emittierten ersten ringförmigen Lichtstrahl (381) in einen zweiten ringförmigen Lichtstrahl (281) umwandelt, der eine Ausbreitungsrichtung mit einem zweiten Ringwinkel in Bezug auf die zweite optische Achse (36) aufweist, der sich vom ersten Ringwinkel unterscheidet.

11. Werkzeug nach Anspruch 10, wobei das zweite Axicon (47) konkav ist.

12. Werkzeug nach einem der Ansprüche 10 und 11, wobei das zweite Axicon (47) transparent oder reflektierend ist.

13. Werkzeug nach einem der Ansprüche 10 bis 12, wobei ein Abstand zu der zweiten optischen Achse (36), mit dem der erste ringförmige Lichtstrahl (381) in das zweite Axikon (47) eintritt, den zweiten Ringwinkel bestimmt, und wobei die Anzeigevorrichtung (8) ein Einstellelement (10) umfasst, das einen Abstand zwischen dem ersten Axikon (37) und dem zweiten Axikon (47) entlang der zweiten optischen Achse (36) steuert, um den vorbestimmten Abstand einzustellen.

## Revendications

1. Outil de travail tenu en main, pour traiter une pièce (3), comprenant un nez d'outil (6) prévu pour entrer en contact avec la pièce (3) à un point de travail (4), et un indicateur (8) prévu pour indiquer une ligne de référence (9) sur une surface de la pièce (3) à une distance prédéterminée par rapport au point de travail (4) lorsque le nez d'outil (6) entre en contact avec la pièce (3) au point de travail (4), **caractérisé en ce que** l'indicateur (8) est configuré pour indiquer la ligne de référence (9), formant un arc circulaire ayant son centre au point de travail (4).

2. Outil selon l'une quelconque des revendications précédentes, dans lequel l'indicateur (8) comprend un élément de réglage (10) prévu pour régler la distance prédéterminée, par un utilisateur de l'outil.

3. Outil selon l'une quelconque des revendications précédentes, dans lequel l'indicateur (8) comprend une source de lumière (31) et un projecteur (32) projetant un faisceau de lumière (33) émis par la source de lumière (31) sur la ligne de référence (9).

4. Outil selon la revendication 3, dans lequel la source de lumière (31) comprend une diode électroluminescente (35) ou une diode laser.

5. Outil selon l'une quelconque des revendications 3 et 4, dans lequel le projecteur (32) comprend un premier axicon (37) ayant un premier axe optique (36) qui en particulier s'étend à travers le point de travail (4) lorsque le nez d'outil (6) entre en contact avec la pièce (3) au point de travail (4), dans lequel le premier axicon (37) transforme le faisceau de lumière (33), émis par la source de lumière (31), en un premier faisceau de lumière en forme d'anneau (381) ayant une direction de propagation à un premier angle d'anneau par rapport au premier axe optique (36).

6. Outil selon la revendication 5, dans lequel le premier axicon (37) est concave, ou convexe.

7. Outil selon l'une quelconque des revendications 5 et 6, dans lequel le premier axicon (37) est transparent, ou réfléchissant.

8. Outil selon l'une quelconque des revendications 5 à 7, dans lequel l'indicateur (8) comprend un élément de réglage (10) commandant une position du premier axicon (37) le long du premier axe optique (36) pour régler la distance prédéterminée.

9. Outil selon l'une quelconque des revendications 5 à 8, dans lequel le projecteur (32) comprend un collimateur (39) agencé entre la source de lumière (31) et le premier axicon (37) et collimatant le faisceau de lumière (33), émis par la source de lumière (31), sur le premier axicon (37).

10. Outil selon l'une quelconque des revendications 5 à 9, dans lequel le projecteur (32) comprend un second axicon (47) ayant un second axe optique (36) qui en particulier s'étend à travers le point de travail (4) lorsque le nez d'outil (6) entre en contact avec la pièce (3) au point de travail (4) et qui en particulier coïncide avec le premier axe optique (36), dans lequel le second axicon (47) transforme le premier faisceau de lumière en forme d'anneau (381), émis par le premier axicon (37), en un second faisceau de lumière en forme d'anneau (281) ayant une direction de propagation à un second angle d'anneau par rapport au second axe optique (36) différent du premier angle d'anneau.

11. Outil selon la revendication 10, dans lequel le second axicon (47) est concave.

12. Outil selon l'une quelconque des revendications 10 et 11, dans lequel le second axicon (47) est transparent, ou réfléchissant.

13. Outil selon l'une quelconque des revendications 10 à 12, dans lequel une distance depuis le second axe optique (36) auquel le premier faisceau de lumière en forme d'anneau (381) entre dans le second axicon (47) détermine le second angle d'anneau, et dans lequel l'indicateur (8) comprend un élément de réglage (10) commandant une distance entre le premier axicon (37) et le second axicon (47) le long du second axe optique (36) pour régler la distance prédéterminée.
